**Europäisches Patentamt**

**European Patent Office**

**Office européen des brevets**

(19)

(11) Veröffentlichungsnummer : **0 066 108**
**B1**

(12) **EUROPÄISCHE PATENTSCHRIFT**

(45) Veröffentlichungstag der Patentschrift :
24.04.85

(21) Anmeldenummer : 82103920.3

(22) Anmeldetag : 06.05.82

(51) Int. Cl.⁴ : **C 09 D 3/81**, C 09 D 5/22,
C 08 L 33/00, C 08 L 35/06

(54) **Strassenmarkierungsstoff auf Basis einer wässrigen Kunststoffdispersion.**

(30) Priorität : 02.06.81 DE 3121769

(43) Veröffentlichungstag der Anmeldung :
08.12.82 Patentblatt 82/49

(45) Bekanntmachung des Hinweises auf die Patenterteilung : 24.04.85 Patentblatt 85/17

(84) Benannte Vertragsstaaten :
AT BE CH FR LI NL

(56) Entgegenhaltungen :
DE-A- 2 811 913
DE-B- 2 749 625
Die Akte enthält technische Angaben die nach dem
Eingang der Anmeldung eingereicht wurden und die
nicht in dieser Patentschrift enthalten sind.

(73) Patentinhaber : LIMBURGER LACKFABRIK GMBH
Im Elbboden 8
D-6250 Limburg (DE)

(72) Erfinder : Lischka, Ingo
Schulstrasse 12
D-5431 Wallmerod (DE)
Erfinder : Born, Horst
Oberstrasse 13
D-6251 Hangenmeilingen (DE)

(74) Vertreter : Bonsmann, Manfred, Dipl.-Ing.
Kaldenkirchener Strasse 35a
D-4050 Mönchengladbach 1 (DE)

## Beschreibung

Straßenmarkierungsstoffe im Sinne des Oberbegriffs des Patentanspruchs sind bereits bekannt.

So beschreibt die DE-OS 27 02 087 Straßenmarkierungsstoffe, welche unter Mitverwendung von mehr oder weniger flüchtigen organischen Lösemitteln erhalten werden. Die Lösemittel verflüchtigen sich nach der Applikation des Straßenmarkierungsstoffes und belasten dadurch die Umwelt, insbesondere wenn als Lösemittel chlorierte Kohlenwasserstoffe, wie beispielsweise Methylenchlorid, eingesetzt werden. Bei Einsatz von brennbaren Lösemitteln besteht darüber hinaus die Gefahr von Bränden bei der Herstellung, Lagerung und Applikation der Straßenmarkierungsstoffe.

Man hat sich daher bemüht, die organischen Lösemittel teilweise oder vollständig durch Wasser zu ersetzen.

So beschreibt schon die DE-PS 12 32 871 Wäßrige, pigmenthaltige Überzugsemulsionen, mit welchen farbige Zonen oder Streifen sehr geringer Dicke auf Straßendecken hergestellt werden können. Die Markierungsstoffe bzw. die damit hergestellten Straßenmarkierungen entsprechen jedoch nicht den Anforderungen der Bundesanstalt für Straßenwesen (Technische Bestimmungen für die Prüfung von Markierungsstoffen für Bundesfernstraßen von 1970 in der Ausgabe Dezember 1972, abgekürzte Bezeichnung TP-M 70/72).

In der DE-OS 28 11 913 werden wasserlösliche, reaktive Bindemittel, die in Form einer wäßrigen Lösung — gegebenenfalls im Gemisch mit wasserlöslichen oder wasserunlöslichen organischen Lösemitteln — vorliegen, zur Herstellung von Straßenmarkierungsstoffen vorgeschlagen. Derartige Markierungsstoffe konnten sich jedoch in der Praxis bisher nicht durchsetzen, da sie den Anforderungen der TP-M 70/72 nicht genügen.

Entsprechendes gilt für Straßenmarkierungsstoffe auf Basis einer wäßrigen Kunststoffdispersion, welche gemäß US-PS 3 940 385 erhalten werden können.

Die Aufgabe bestand darin, im Sinne des Oberbegriffs des Patentanspruchs Straßenmarkierungsstoffe bereitzustellen, welche im Gegensatz zu den derzeit eingesetzten Straßenmarkierungsstoffen keine Mitverwendung von organischen Lösemitteln bedürfen, und welche im Gegensatz zu den bekannten aber nicht eingesetzten Straßenmarkierungsstoffen, welche keine organischen Lösemittel enthalten, die Anforderungen der TP-M 70/72 erfüllen.

Die Aufgabe wurde durch den Straßenmarkierungsstoff gemäß dem Patentanspruch gelöst.

Das Gewichtsverhältnis der Feststoffe der Dispersionen gemäß den Merkmalen 1.1 und 1.2 beträgt 1 : 0,2 bis 1 : 2,8, vorzugsweise 1 : 1 bis 1 : 1,4.

Die Summe der Feststoffe der Dispersionen beträgt 7 bis 41, vorzugsweise 20 bis 28 Gew.T., bezogen auf 100 Gew.T. des Markierungsstoffes.

Die erfindungsgemäß einzusetzenden, wäßrigen Kunststoffdispersionen werden durch die minimale Filmbildungstemperatur (MFT), welche wie in der DIN 53 787 beschrieben bestimmt wird, charakterisiert.

Die wäßrige, Dispersion des Reinacrylharzes hat eine MFT im Bereich von 25 bis 55 °C, vorzugsweise im Bereich von 38 bis 46 °C.

Die wäßrige Dispersion des carboxylierten Styrol/Dibutylfumarat-Copolymeren hat eine MFT im Bereich von 4 bis 30 °C, vorzugsweise im Bereich von 8 bis 16 °C.

Der Markierungsstoff enthält 0 bis 9 Gew.%, vorzugsweise 1,5 bis 3,5 Gew.%, eines üblichen Weichmachers. Als Weichmacher kann beispielsweise Dioctylphthalat eingesetzt werden.

Der Markierungsstoff enthält 0,5 bis 6 Gew.%, vorzugsweise 1 bis 3 Gew.%, Polypropylenimin.

Der fertige Markierungsstoff befindet sich eine begrenzte Zeit im verarbeitungsfähigen Zustand. Sie wird als Topfzeit bezeichnet und beträgt im allgemeinen maximal ca. 48 h.

Besonders vorteilhaft ist die Möglichkeit, nach Ablauf der Topfzeit den Markierungsstoff durch erneute Zugabe von Polypropylanimin in den angegebenen Mengen wieder in den verarbeitungsfähigen Zustand zu versetzen. Dadurch können Materialverluste vermieden werden.

Der Anmeldungsgegenstand wird durch das folgende Beispiel erläutert. Darin bedeuten Teile Gewichtsteile.

Die eingesetzten, wäßrigen Dispersionen sind handelsüblich und wie folgt charakterisiert:

a) Reinacrylharz-Dispersion:
Festkörpergehalt: 53 Gew.%
Dynamische Viskosität (Brookfield-Viskosimeter,
Spindel II/6 Upm/20 °C): ca. 1 000 mPa.s
MFT: ca. 44 °C
Mittlere Teilchengröße: ca. 0,3 μm
pH-Wert: 9 bis 10
frost- und elektrolytbeständig;

b) Dispersion eines carboxylierten Styrol/Dibutylfumarat-Copolymeren:
Festkörpergehalt: 50 Gew.%
Viskosität (Rheometer C III): ca. 950 mPa.s

2

0 066 108

MFT : ca. 12 °C
Mittlere Teilchengröße : ca. 0,1 μm
pH-Wert : 8 bis 9.

Herstellung des Straßenmarkierungsstoffes

In einem Rührgerät werden 6,8 Teile Wasser vorgelegt und nacheinander

2,6 Teile Dioctylphthalat,
17,9 Teile Titandioxid,
10,5 Teile a und
13,4 Teile b

zugegeben. Es wird noch 10 Minuten gerührt. Dann werden

19,9 Teile Cristobalitmehl (Teilchengröße im Bereich von ca. 15 bis 250 μm),
2,0 Teile Diatomeenerde (Teilchengröße im Bereich von ca. 4 bis 20 μm),
10,5 Teile a und
13,4 Teile b (≙ Gewichtsverhältnis der Gesamtfeststoffe von a und b : 1 : 1,2 ; Gesamtfeststoffe von a und b : 25 Teile/100 Teile Markierungsstoff)

unter Rühren zugegeben.

97 Teile der erhaltenen Mischung werden mit
3 Teilen einer 60 gewichtsprozentigen, wäßrigen Lösung von Polypropylenimin vermischt. Die Topfzeit des fertigen Straßenmarkierungsstoffes beträgt maximal 48 h. Nach Ablauf der Topfzeit kann der Markierungsstoff durch erneute Zugabe der gleichen Menge Polypropylenimin wieder in den verarbeitungsfähigen Zustand versetzt werden.

Der erhaltene Straßenmarkierungsstoff bzw. die mit ihm auf Zementbetondecken oder bituminösen Fahrbahndecken aufgelegten Dünnschichtmarkierungen erfüllen die in der TP-M 70/72 gestellten Anforderungen.

**Patentanspruch**

Straßenmarkierungsstoff, welcher auf Zementbetondecken oder bituminösen Fahrbahndecken als Dünnschichtmarkierung aufgelegt wird, bestehend aus einem als Lösung oder Dispersion vorliegenden, organischen Bindemittel üblichen Pigmenten, Füllstoffen und Hilfsmitteln, dadurch gekennzeichnet, daß
1. das Bindemittel ein Gemisch
   1.1 eines Reinacrylharzes und
   1.2 eines carboxylierten Styrol/Dibutylfumarat-Copolymeren ist, welche jeweils als wäßrige Dispersion vorliegen, wobei das Gewichtsverhältnis ihrer Feststoffe im Bereich von 1 : 0,2 bis 1 : 2,8 liegt, und ihre Feststoffe zusammen 7 bis 41 Gew.T. sind, und wobei die wäßrige Dispersion des Reinacrylharzes eine minimale Filmbildungstemperatur (MFT) im Bereich von 25 bis 55 °C und die wäßrige Dispersion des carboxylierten Styrol/Dibutylfumarat-Copolymeren eine MFT im Bereich von 4 bis 30 °C aufweisen, und der Markierungsstoff
2. 0 bis 9 Gew.T. eines üblichen Weichmachers und
3. 0,5 bis 6 Gew.T. Polypropylanimin enthält,
jeweils bezogen auf 100 Gew.T. des Markierungsstoffes.

**Claim**

Road marking material which is laid on cement concrete surfaces or bituminous carriageway surfaces as a thin-layer marking, comprising an organic binder which is in the form of a solution or dispersion, conventional pigments, fillers and adjuvants, characterised in that
1. the binder is a mixture,
   1.1 of a pure acrylic resin and
   1.2 a carboxylated styrene/dibutyl fumarate copolymer which respectively occur in the form of an aqueous dispersion, wherein the weight ratio of the solids thereof is in the range of from 1 : 0.2 to 1 : 2.8 and the solids thereof are together from 7 to 41 parts by weight, and wherein the aqueous dispersion of the pure acrylic resin has a minimum film forming temperature (MFT) in the range of from 25 to 55 °C and the aqueous dispersion of the carboxylated styrene/dibutyl fumarate copolymer has an MFT in the range of from 4 to 30 °C, and the marking material contains

3

2. from 0 to 9 parts by weight of a conventional plasticiser and

3. from 0.5 to 6 parts by weight of polypropyleneimine,

in each case with respect to 100 parts by weight of the marking material.

**Revendication**

Matière de marquage de routes que l'on applique en tant que marquage en couche mince sur des revêtements en béton au ciment ou des revêtements bitumineux de chaussée, composée d'un liant organique présent sous forme de solution ou de dispersion, de pigments, charges et adjuvants usuels, caractérisée en ce que

1. le liant est un mélange

1.1 d'une résine acrylique pure et

1.2 d'un copolymère carboxylé styrène/fumarate de dibutyle, qui sont chacun présents sous forme de dispersion aqueuse, le rapport de poids de leurs solides se situant dans la gamme de 1 : 0,2 à 1 : 2,8 et leurs solides constituant ensemble 7 à 41 parties en poids, la dispersion aqueuse de la résine acrylique pure présentant une température minimale de formation de film de l'intervalle de 25 à 55 °C et la dispersion aqueuse du copolymère carboxylé styrène/fumarate de dibutyle une température minimale de formation de film de l'intervalle de 4 à 30 °C, et que la matière de marquage contient

2. 0 à 9 parties en poids d'un plastifiant usuel et

3. 0,5 à 6 parties en poids de polypropylène-imine,

rapportés chaque fois à 100 parties en poids de la matière de marquage.